(19) Europäisches Patentamt
European Patent Office
Office européen des brevets

(11) **EP 1 780 501 B1**

(12) **FASCICULE DE BREVET EUROPEEN**

(45) Date de publication et mention
de la délivrance du brevet:
**10.12.2008 Bulletin 2008/50**

(51) Int Cl.:
**G01B 11/24** *(2006.01)*  **G01L 5/00** *(2006.01)*
**F16C 19/52** *(2006.01)*  **G01M 13/04** *(2006.01)*

(21) Numéro de dépôt: **06122229.5**

(22) Date de dépôt: **13.10.2006**

(54) **Procédé de contrôle du profil de la zone de raccordement entre la partie cylindrique et la dépouille d'une pièce de turbomachine**

Verfahren zur Kontrolle des Profils der Verbindungszone zwischen dem zylindrischen Teil und der Verjüngung eines Teils einer Strömungsmaschine

Testing process for the profile of the coupling zone between the cylindrical part and the clearance of a turbomachine part

(84) Etats contractants désignés:
**DE FR GB NL SE**

(30) Priorité: **25.10.2005 FR 0510850**

(43) Date de publication de la demande:
**02.05.2007 Bulletin 2007/18**

(73) Titulaire: **SNECMA**
**75015 Paris (FR)**

(72) Inventeur: **Plona, Daniel**
**77870, VULAINES SUR SEINE (FR)**

(74) Mandataire: **Boura, Olivier et al**
**Cabinet Beau de Loménie**
**158, rue de l'Université**
**75340 Paris Cedex 07 (FR)**

(56) Documents cités:
DE-A1- 19 954 734    US-A- 3 763 697
US-A- 5 890 815    US-B1- 6 390 685

• H. KRZEMINSKI-FREDA, B. WARDA: "Correction of the roller generators in spherical roller bearings" WEAR (ELSEVIER), vol. 192, 1996, pages 29-39, XP002370454
• J. V. POPLAWSKI, E. V. ZARETSKY, S. M. PETERS: "Effect or Roller Profile on Cylindrical Roller Bearing Life Prediction" NASA PUBLICATIONS, [Online] no. TM-2000-210368, août 2000 (2000-08), pages 1-25, XP002370455 Extrait de l'Internet: URL:http://gltrs.grc.nasa.gov/reports/2000 /TM-2000-210368.pdf>

## Description

Arrière-plan de l'invention

La présente invention se rapporte au domaine général du contrôle de la qualité du profil des pièces de turbomachine soumises à des pressions de contact, notamment des rouleaux cylindriques utilisés dans les paliers à roulement de turbomachine.

Les paliers à roulement sont couramment utilisés dans le domaine aéronautique. Dans une turbomachine, les paliers à roulement permettent notamment de supporter en rotation un premier arbre par rapport à un stator ou par rapport à un second arbre coaxial au premier. De tels paliers sont essentiellement constitués de billes ou de rouleaux cylindriques retenus dans des pistes de roulement formés par des bagues extérieure et intérieure. On utilise généralement des paliers à billes pour reprendre les charges axiales et des paliers à rouleaux pour reprendre les charges radiales de la turbomachine.

Les roulements des paliers utilisés dans les turbomachines sont soumis à des conditions de fonctionnement de plus en plus sévères. Bien que le nombre de défaillances relevées soit en constante diminution, le coût des incidents reste élevé et l'objectif de zéro défaillance doit être visé dès la conception du palier. Il est ainsi devenu nécessaire d'améliorer encore la fiabilité des paliers à rouleaux en particulier en contrôlant la conformité de leur profil. La fiabilité d'un contact roulant dans un palier à rouleaux cylindriques dépend notamment de la manière dont les efforts se répartissent entre les deux surfaces de contact et les procédures à mettre en place pour assurer l'absence de défaillance du palier passent donc par une étape d'analyse du profil du rouleau. Cette analyse peut être réalisée à l'aide d'instruments standards de mesure de forme et de surface, tels que les machines de rugosité équipée d'un capteur inductif à diamant ou à laser par exemple.

En pratique, les rouleaux cylindriques des paliers sont dépouillés à leurs extrémités afin d'éviter les sur-contraintes de bord. Les zones de raccordement entre ces deux dépouilles et la partie cylindrique des rouleaux peuvent cependant engendrer des contraintes de contact inadmissibles en terme de fiabilité du contact piste/rouleau. L'amplitude de ces sur-contraintes varie selon la géométrie des zones de raccordement effectivement réalisées en fabrication et influence directement sur le risque d'écaillage du rouleau. Or, les équipements standard de mesure ne permettent pas de contrôler ces zones de raccordement. En effet, la plupart de ces instruments se limitent à la caractérisation de profils simples et uniques (tels que des profils plans, circulaires, sphériques ou cylindriques) et ne permettent pas de traiter de manière fiable des profils mixtes (combinaisons de profils simples), et encore moins les profils quelconques réalisables avec les moyens de fabrication actuels qui sont associés aux zones de raccordement entre les dépouilles et la partie cylindrique des rouleaux. Aussi, le contrôle de la qualité du raccordement entre les différents profils d'un rouleau cylindrique de palier ne comporte actuellement aucune exigence quantifiable.

Les documents US 6,390 685 et US 5,890,815 décrivent des profils de surface de rouleaux pour palier de roulement et une modélisation des pressions de contact pour déterminer la durée de vie des rouleaux.

Objet et résumé de l'invention

La présente invention a donc pour but principal de pallier de tels inconvénients en proposant un procédé permettant non seulement de contrôler le profil de la zone de raccordement entre la partie cylindrique et la dépouille d'un rouleau de palier à roulement mais également de déterminer l'aptitude d'une géométrie complexe quelconque à assurer la fonction de répartition de pression.

A cet effet, il est prévu un procédé de contrôle du profil de la zone de raccordement entre la partie cylindrique et la dépouille d'un rouleau pour palier de roulement selon la revendication 1.

Le procédé selon l'invention permet de réaliser une modélisation des pressions de contact s'appliquant à la surface du rouleau grâce à un simple traitement des points du profil mesuré. Il est ainsi possible de réaliser un contrôle fiable de la qualité du profil d'un rouleau pour palier à roulement, et notamment de la qualité de la zone de raccordement entre la dépouille et la partie cylindrique du rouleau.

Selon une disposition avantageuse de l'invention, le profil de surface de la pièce mesuré se présente sous la forme d'une pluralité de signaux numériques obtenus à l'aide d'une machine de rugosité, lesdits signaux étant traités pour obtenir une pluralité de points de coordonnées géométriques schématisant le profil géométrique de la surface de la pièce.

Selon encore une autre disposition avantageuse de l'invention, l'étape de modélisation des pressions de contact est basée sur le calcul de pressions de surface pour un contact entre deux corps élastiques.

Les valeurs de seuil prédéfinies sont de préférence fonction des pressions de contact modélisées pour la troisième zone géométrique du profil de surface de la pièce. De plus, les valeurs de seuil prédéfinies sont avantageusement fonction de la longueur axiale de la pièce.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente de façon schématique un profil de surface partiel d'un rouleau de palier à roulement pour turbomachine ;

- la figure 2 est un schéma montrant différentes étapes de mise en oeuvre du procédé selon l'invention ;
- la figure 3 est une courbe montrant l'évolution de la surpression de contact à la surface du rouleau en fonction du rayon de raccordement entre les dépouilles et la partie cylindrique du rouleau ; et
- la figure 4 est une courbe schématisant la surpression de contact à la surface du rouleau en fonction de la longueur cylindrique de celui-ci.

Description détaillée d'un mode de réalisation

Dans la description qui suit, il est envisagé le cas du contrôle du profil de surface d'un rouleau cylindrique pour palier à roulement de turbomachine. L'invention est toutefois applicable au contrôle du profil de surface de pièces de turbomachine autres que des rouleaux, de telles pièces étant soumises à des pressions de contact et comportant une partie cylindrique raccordée à une dépouille (il peut par exemple s'agir d'attaches d'aubes dont la maîtrise du profil est essentielle).

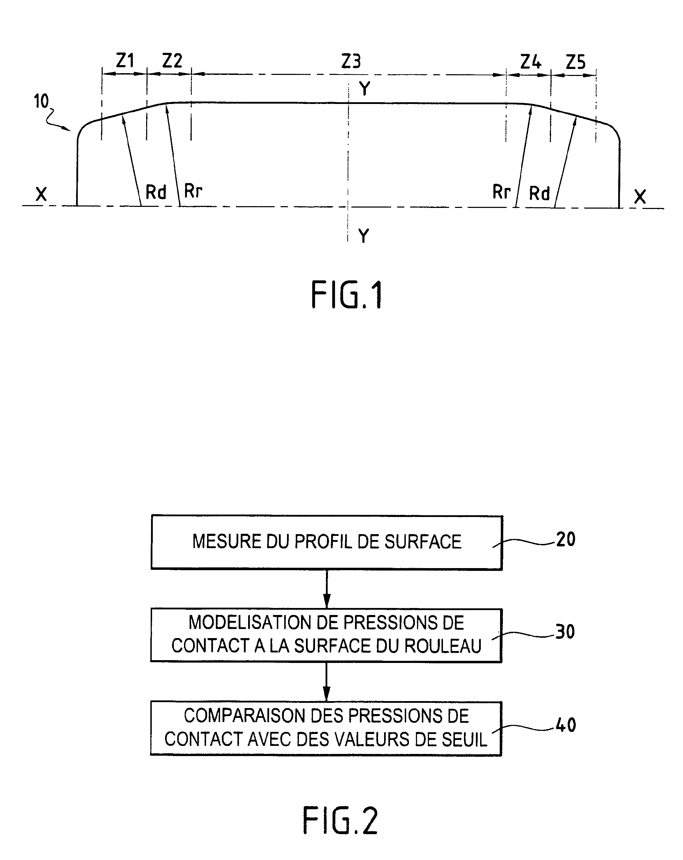

Comme représenté sur la figure 1, on considère au préalable que le profil de surface d'un rouleau cylindrique 10 de palier à roulement de turbomachine peut être délimité géométriquement par : deux premières zones Z1 et Z5 correspondant aux deux dépouilles du rouleau ; deux deuxièmes zones Z2 et Z4 correspondant chacune au raccordement entre la partie cylindrique et l'une des dépouilles du rouleau ; et une troisième zone Z3 correspondant à la partie cylindrique du rouleau.

Le rouleau cylindrique 10 est symétrique, d'une part par rapport à son axe longitudinal X-X (seul un demi rouleau est représenté sur la figure 1), et d'autre part par rapport à un axe médian Y-Y perpendiculaire à son axe longitudinal X-X. Les premières zones Z1 et Z5 et les deuxièmes zones géométriques Z2 et Z4 du rouleau sont symétriques par rapport à l'axe médian Y-Y du rouleau. En outre, les premières zones Z1 et Z5 et les deuxièmes zones géométriques Z2 et Z4 du rouleau ont un profil sensiblement circulaire de rayons respectifs Rd et Rr, tandis que la troisième zone a un profil sensiblement rectiligne.

La figure 2 représente les étapes d'un mode particulier de réalisation d'un procédé de contrôle de profil selon l'invention.

De manière générale, le procédé de contrôle de profil selon l'invention peut être mis en oeuvre au moyen d'un système informatique tel que notamment une station de travail informatique équipée d'un logiciel de traitement de données numériques et reliée à un instrument de mesure du profil de surface d'une pièce géométrique.

Selon une première étape (20) du procédé, l'opérateur réalise une mesure du profil de surface du rouleau cylindrique à contrôler. Cette mesure peut être obtenue à l'aide d'une machine de rugosité standard, telle qu'un appareil de mesure à capteur inductif à diamant ou à laser par exemple. Dans ces appareils, un capteur est fixé à un bras de support mobile pouvant se déplacer de telle sorte que le capteur suive le profil de surface du rouleau à contrôler.

Le profil de surface mesuré se présente sous la forme de signaux indiquant la position du capteur pendant son trajet le long de la surface du rouleau. Ces signaux sont transmis à la station de travail informatique qui est reliée au capteur afin d'y être traités numériquement pour obtenir une pluralité de points de coordonnées géométriques schématisant le profil géométrique de la surface du rouleau à contrôler.

A partir de ces points géométriques ainsi obtenus, la zone de contact potentielle entre le rouleau et ses pistes de roulement est générée par rotation du profil de surface autour de l'axe longitudinal X-X du rouleau.

L'étape suivante (30) consiste alors à modéliser les pressions de contact s'appliquant à la surface du rouleau pour chacune de ses zones géométriques Z1 à Z5, c'est-à-dire les pressions s'exerçant entre la surface du rouleau et ses pistes de roulement. Cette étape peut être réalisée à l'aide d'un logiciel de calcul équipant la station de travail informatique.

La modélisation des pressions de contact s'appliquant à la surface du rouleau consiste essentiellement à calculer les pressions de surface pour un contact entre deux corps élastiques. Le principe de ce calcul du champ de pression repose sur la discrétisation de la surface des deux corps, et l'écriture des probabilités géométriques (non interpénétration des surfaces) et de l'équilibre des pressions agissant sur ces surfaces (principe d'action et de réaction). L'écriture des équations nécessite la connaissance de la géométrie des surfaces avant et après déformation, donc des déplacements sous charge des différents points des surfaces potentiellement en contact.

Les coefficients permettant de calculer les déplacements en fonction du champ de pression sont donnés par les relations de Boussinescq. Pour le calcul de ces coefficients, les principales hypothèses sont les suivantes : les matériaux des surfaces sont de même nature, les volumes sont considérés comme des massifs semi infinis, et les déformations, distances et la direction du chargement sont perpendiculaires à un plan de contact. La relation géométrique entre les surfaces est alors la suivante :

$$Y_i = E_i + D_i^A + D_i^B + S_p$$

avec :

$Y_i$ : distance entre les surfaces déformées ;
$E_i$ : distance entre les surfaces non déformées ;
$D_i^A$ : déformation de la surface A ;
$D_i^B$ : déformation de la surface B ; et
$S_p$ : rapprochement global des surfaces (constante).

Les déformations de surfaces sont alors telles que :

$$D_i^A = \left( K^A \right) \times P_i^A \quad ; \text{ et } \quad D_i^B = \left( K^B \right) \times P_i^B$$

dans lesquelles $K^A$ et $K^B$ sont des coefficients d'influence géométrique (qui sont proportionnels à la topologie de la surface en vis-à-vis de la charge).

Par principe de l'action et de la réaction, la relation $P_i^A = P_i^B = P_i$ est établie en chaque point de la surface.

Dans la zone de contact entre les deux surfaces, les pressions de contact sont alors déterminées en résolvant les équations suivantes :

$$Y_i = 0 \quad ; \quad P_i > 0 \quad ; \text{ et } \sum P_i \times DS = W \quad ;$$

W étant la charge normale au contact et DS la dimension de la zone de contact. Hors de la zone de contact, on a les équations suivantes :

$$Y_i > 0 \text{ et } P_i = 0.$$

La zone de contact entre les deux surfaces n'étant à priori pas connue, il en résulte un processus itératif jusqu'à ce que toutes les conditions soient satisfaites. Il est par ailleurs nécessaire de « discrétiser » une surface suffisamment grande pour que toute la zone de contact soit incluse à l'intérieur.

Enfin, selon une dernière étape du procédé (40), les pressions de contact ainsi modélisées pour les deuxièmes zones géométriques Z2 et Z4 du profil de surface du rouleau (c'est-à-dire pour les zones de raccordement entre la partie cylindrique et les dépouilles du rouleau) sont comparées à des valeurs de seuil prédéfinies. En fonction des résultats obtenus lors de cette comparaison, l'opérateur pourra choisir de conserver ou non le rouleau pour l'utiliser dans un palier à roulement de turbomachine.

Les valeurs de seuil sont prédéfinies par expérience. Elles sont choisies en fonction de l'emplacement du roulement dans la turbomachine, de ses caractéristiques géométriques, des matériaux, et des sollicitations mécaniques extérieures et notamment du niveau de pression de contact entre le rouleau le plus chargé et les pistes de roulement.

De préférence, les valeurs de seuil sont prédéfinies en fonction des pressions de contact modélisées pour la troisième zone géométrique Z3 du profil de surface du rouleau (c'est-à-dire pour la zone correspondant à la partie cylindrique du rouleau), et plus précisément en fonction de la pression de contact obtenue au centre de cette troisième zone géométrique.

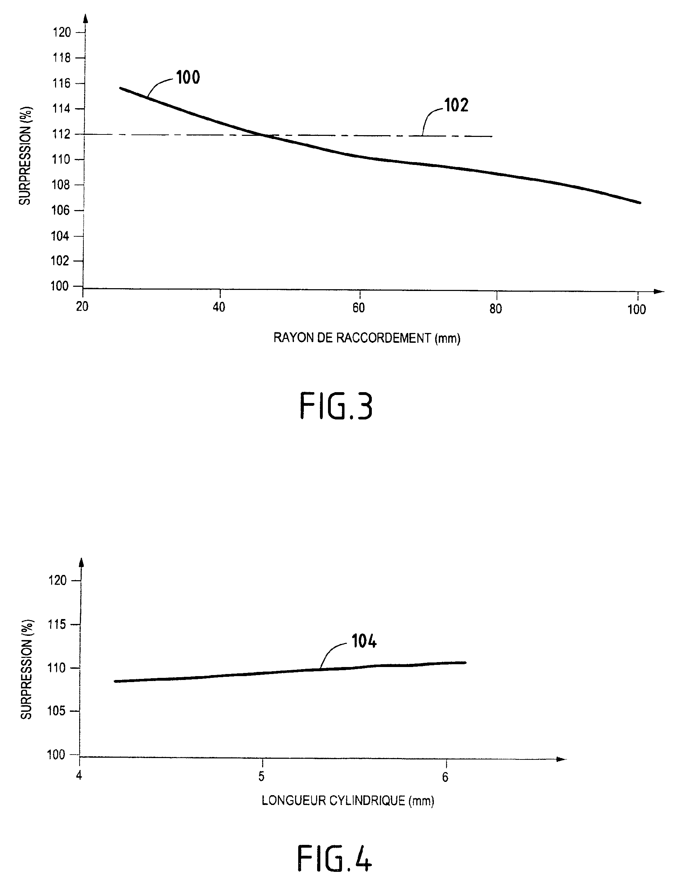

Par exemple, la surpression calculée pour les zones de raccordement entre la partie cylindrique et l'une des dépouilles du rouleau peut s'exprimer en pourcentage de la pression obtenue au centre de la zone de contact cylindrique du rouleau. Cette surpression devra alors être inférieure à une valeur de seuil définie par expérience. La figure 3 en illustre un exemple. Sur cette figure, est représentée une courbe 100 schématisant la surpression de contact à la surface du rouleau en fonction du rayon de raccordement Rr entre les dépouilles et la partie cylindrique d'un rouleau (c'est-à-dire des zones géométriques Z2 et Z4 de la figure 1). Cette surpression s'exprime en pourcentage de la pression obtenue au centre de la zone de contact cylindrique du rouleau. La limite en surpression 102 définie par expérience (ici de l'ordre de 112 %) représente la valeur de seuil au-delà de laquelle les rouleaux ne devront pas être conservés pour l'application à un palier de roulement de turbomachine. A cette limite 102, correspond un rayon de raccordement Rr de l'ordre de 50 mm environ.

Par ailleurs, la partie cylindrique du rouleau (c'est-à-dire la zone géométrique Z3) reprend une grande partie de la charge appliquée sur le rouleau. Lorsque la longueur de cette partie cylindrique varie, l'importance du pic de surpression varie donc légèrement comme cela est représenté sur la figure 4. Sur cette figure, est représentée une courbe 104 schématisant la surpression de contact à la surface du rouleau en fonction de la longueur cylindrique de celui-ci. Ainsi, les valeurs de seuil prédéfinies sont de préférence fonction de la longueur axiale du rouleau. Cette influence étant aisément paramétrable, la correction à la valeur de seuil pourra aisément être ajoutée à la chaîne de calcul.

**Revendications**

1. Procédé de contrôle du profil de la zone de raccordement entre la partie cylindrique et la dépouille d'un rouleau (10) pour palier de roulement de turbomachine, le profil de surface du rouleau étant délimité géométriquement par au moins une première zone (Z1, Z5) correspondant à la dépouille du rouleau, au moins une deuxième zone (Z2, Z4) correspondant au raccordement entre la partie cylindrique et la dépouille du rouleau et une troisième zone (Z3) correspondant à la partie cylindrique du rouleau, **caractérisé en ce que** le procédé consiste à :

   - réaliser une mesure du profil de surface du rouleau (20) ;
   - générer une zone de contact potentielle entre le rouleau et ses pistes de roulement par rotation du profil de surface mesuré autour d'un axe longitudinal (X-X) du rouleau;
   - à partir de la mesure du profil de surface, modéliser (30) les pressions de contact s'appliquant à la surface du rouleau pour chacune de ses zones géométriques ; et
   - comparer (40) les pressions de contact modélisées pour la deuxième zone géométrique (Z2, Z4) du profil de surface du rouleau à des valeurs de seuil prédéfinies.

**2.** Procédé selon la revendication 1, dans lequel le profil de surface de la pièce mesuré se présente sous la forme d'une pluralité de signaux numériques obtenus à l'aide d'une machine de rugosité, lesdits signaux étant traités pour obtenir une pluralité de points de coordonnées géométriques schématisant le profil géométrique de la surface de la pièce.

**3.** Procédé selon l'une des revendications 1 et 2, dans lequel l'étape (30) de modélisation des pressions de contact est basée sur le calcul de pressions de surface pour un contact entre deux corps élastiques.

**4.** Procédé selon l'une quelconque des revendications 1 à 3, dans lequel les valeurs de seuil prédéfinies sont fonctions des pressions de contact modélisées pour la troisième zone géométrique (Z3) du profil de surface du rouleau.

**5.** Procédé selon l'une quelconque des revendications 1 à 4, dans lequel les valeurs de seuil prédéfinies sont fonctions de la longueur axiale du rouleau.

**Claims**

**1.** A method of inspecting the profile of the connection zone between the cylindrical portion and the taper of a roller (10) for a turbomachine roller bearing, the surface profile of the roller being geometrically defined by at least one first zone (Z1, Z5)corresponding to the taper of the roller, at least one second zone (Z2, Z4) corresponding to the connection between the cylindrical portion and the taper of the roller, and a third zone (Z3) corresponding to the cylindrical portion of the roller, **characterized in that** the method consists in :

> . measuring the surface profile of the roller (20);
> . generating a potential zone of contact between the roller and its raceways by rotating the measured surface profile about a longitudinal axis (X-X) of the roller;
> . from the measured surface profile, modeling (30) the contact pressures that apply to the surface of the roller for each of its geometrical zones; and
> . comparing (40) the contact pressures modelled for the second geometrical zone ( Z2, Z4) of the surface profile of the roller with predefined threshold values.

**2.** A method according to claim 1, in which the measured surface profile of the part is in the form of a plurality of digital signals obtained by a roughness-measuring machine, said signals being processed to obtain a plurality of points having geometrical coordinates representing the geometrical surface profile of the part.

**3.** A method according to claim 1 or claim 2, in which the step (30) of modeling the contact pressures is based on calculating surface pressures for a contact between two elastic bodies.

**4.** A method according to any one of claims 1 to 3, in which the predefined threshold values are functions of contact pressures modeled for the third geometrical zone (Z3) of the surface profile of the roller.

**5.** A method according to any one of claims 1 to 4, in which the predefined threshold values are functions of the axial length of the roller.

**Patentansprüche**

**1.** Verfahren zur Überprüfung des Profils des Verbindungsbereichs zwischen dem zylindrischen Teil und der Schräge einer Rolle (10) für Wälzlager einer Turbomaschine, wobei das Oberflächenprofil der Rolle durch wenigstens einen ersten Bereich (Z1, Z5), welcher der Schräge der Rolle entspricht, wenigstens einen zweiten Bereich (Z2, Z4), welcher der Verbindung zwischen dem zylindrischen Teil und der Schräge der Rolle entspricht, sowie einen dritten Bereich (Z3), welcher dem zylindrischen Teil der Rolle entspricht, geometrisch begrenzt ist, **dadurch gekennzeichnet, daß** das Verfahren darin besteht:

> - eine Messung des Oberflächenprofils der Rolle durchzuführen (20),
> - einen möglichen Kontaktbereich zwischen der Rolle und ihren Laufbahnen durch Rotation des gemessenen Oberflächenprofils um eine Längsachse (X-X) der Rolle zu erzeugen,
> - anhand der Messung des Oberflächenprofils die an der Oberfläche der Rolle anliegenden Kontaktdrücke für jeden seiner geometrischen Bereiche zu modellieren (30), und
> - die für den zweiten geometrischen Bereich (Z2, Z4) des Oberflächenprofils der Rolle modellierten Kontaktdrücke mit vordefinierten Schwellenwerten zu vergleichen (40).

**2.** Verfahren nach Anspruch 1, bei dem das gemessene Oberflächenprofil des Teils in Form einer Vielzahl digitaler Signale vorliegt, die mit Hilfe einer Rauhigkeitsmaschine erhalten werden, wobei die Signale verarbeitet werden, um eine Vielzahl von geometrischen Koordinatenpunkten zu erhalten, die das geometrische Profil der Oberfläche des Teils schematisch darstellen.

3. Verfahren nach einem der Ansprüche 1 und 2, bei dem der Schritt (30) des Modellierens der Kontaktdrücke auf der Berechnung von Flächendrücken für einen Kontakt zwischen zwei elastischen Körpern basiert.

4. Verfahren nach einem der Ansprüche 1 bis 3, bei dem die vordefinierten Schwellenwerte von den für den dritten geometrischen Bereich (Z3) des Oberflächenprofils der Rolle modellierten Kontaktdrükken abhängig sind.

5. Verfahren nach einem der Ansprüche 1 bis 4, bei dem die vordefinierten Schwellenwerte von der axialen Länge der Rolle abhängig sind.

Z1　Z2　　　　Z3　　　　Z4　Z5

10

X　　　Rd　Rr　　　　　　　Rr　Rd　　X

Y

Y

## FIG.1

| MESURE DU PROFIL DE SURFACE | 20 |

↓

| MODELISATION DE PRESSIONS DE CONTACT A LA SURFACE DU ROULEAU | 30 |

↓

| COMPARAISON DES PRESSIONS DE CONTACT AVEC DES VALEURS DE SEUIL | 40 |

## FIG.2

7

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6390685 B

- US 5890815 A